# EUROPÄISCHE PATENTSCHRIFT

(11) **EP 1 836 404 B1**
(45) Veröffentlichungstag und Bekanntmachung des Hinweises auf die Patenterteilung: **11.03.2009**
(21) Anmeldenummer: 06806345.2
(22) Anmeldetag: 17.10.2006
(51) Int. Cl.: F16C 17/03, F16C 33/20

(54) **GLEITPENDELLAGER**
FRICTION PENDULUM BEARING
APPUI OSCILLANT A GLISSEMENT

(30) Priorität: 16.12.2005 DE 202005060375 U
(43) Veröffentlichungstag der Anmeldung: 26.09.2007
(73) Patentinhaber: Maurer Söhne Engineering GmbH & Co. KG, 80807 München (DE)
(72) Erfinder: HUBER, Peter, 82377 Penzberg (DE); ROOS, Rainer, 85630 Neukeferloh (DE)
(74) Vertreter: Grosse - Schumacher - Knauer - von Hirschhausen
(86) Internationale Anmeldenummer: PCT/EP2006/010018
(87) Internationale Veröffentlichungsnummer: WO 2007/073788

(56) Entgegenhaltungen:
- US-A- 5 867 951
- US-A- 6 021 992

## Beschreibung

Die Erfindung betrifft ein Lager zum Schutz für Bauwerke, wobei das Lager als Gleitpendellager mit einem Gleitwerkstoff ausgebildet ist, eine erste Gleitplatte mit einer ersten konkaven Gleitfläche und einen Gleitschuh aufweist, der mit der ersten Gleitfläche der ersten Gleitplatte in gleitendem Kontakt steht, und die erste Gleitfläche der ersten Gleitplatte eine in wenigstens einer Dimension stabile Gleichgewichtslage für den Gleitschuh aufweist, in die der Gleitschuh nach einer durch eine äußere Krafteinwirkung verursachten Auslenkung von sich aus zurückkehrt.

Die Einsatzmöglichkeiten von Lagern im Bauwesen sind vielfältig. Ein Einsatzgebiet ist der Erdbebenschutz. Beispielsweise im Brückenbau finden Verformungslager zur horizontal-elastischen Lagerung Verwendung.

Erdbebenschutzsysteme dienen dazu, Bauwerke vor zerstörerischen Einwirkungen durch Erdbeben zu schützen. Dazu werden beispielsweise Lager eingesetzt, die das Gebäude von seinem Fundament entkoppeln sollen. Die Entkopplung kann auch zum Schutz vor Erschütterungen mit anderer Ursache vorgesehen sein.

Da Erdbeben selbst in seismisch aktiven Gebieten selten vorkommen, sollen die Systeme grundsätzlich langlebig, robust und relativ wartungsfrei ausgelegt sein. Die Anforderungen umfassen ferner eine dauerhafte hohe vertikale Lastaufnahme, eine effektive Entkopplung bzw. Isolation des Gebäudes gegenüber horizontalen Bewegungen des Untergrunds und eine ausreichende Dissipationskapazität zur Dissipation der durch die äußere Einwirkung übertragenen Energie. Die Kosten herkömmlicher Erdbebenschutzsysteme, die diesen Anforderungen zumindest teilweise gerecht werden, sind allerdings beträchtlich. Eine Nachrüstung von Gebäuden mit Erdbebenschutzsystemen und die Instandsetzung von durch Erdbeben beschädigten Systemen sind aufwändig.

Eine Art von Erdbebenschutzsystemen weist eine Basisisolation auf, d.h. das Gebäude wird gegenüber unkontrollierten horizontalen Bewegungen des Baugrunds entkoppelt. Bei bekannten Systemen wird dabei häufig eine möglichst hohe Energiedissipation durch Dämpfungs- und/oder Duktilitätseffekte im Material bzw. in der Basisisolation angestrebt, beispielsweise bei Reibungspendellagern. Auf diese Weise wird eine Beanspruchung des Bauwerks selbst verringert.

Je höher jedoch die Dissipation der Basisisolation durch gedämpfte Schwingungen ist, desto größer ist die Gefahr, dass das System nach dem Ende des Erdbebens nicht mehr in seine ursprüngliche Konfiguration zurückkehrt und somit die Funktionalität in der Folge beeinträchtigt ist. Mögliche Folgeschäden durch Nachbeben und hohe Kosten zur Instandsetzung des Systems sind die Konsequenz.

Ein System, das diese Probleme zumindest teilweise löst, ist im US-Patent 5,867,951 beschrieben. Das Patent bezieht sich auf ein Gleitpendellager zum Erdbebenschutz, bei dem ein thermoplastisches Kunstharz mit niedriger Reibung als Gleitwerkstoff verwendet wird. Bei diesem Lager wird eine Rückkehr des Lagers nach einem Erdstoß in seine Ausgangsposition sichergestellt. Allerdings können sich bei der Verwendung thermoplastischer Kunstharze bereits kleinere Ungenauigkeiten, geometrische Abweichungen und Defekte in den Lagerkomponenten, beispielsweise im Gegenwerkstoff, negativ auf die Lagereigenschaften auswirken.

Liegt beispielsweise ein Gleitschuh auf einer im Verhältnis dazu relativ großen, dünnen Gleitplatte auf, so drückt der Gleitschuh mit einem vergleichsweise kleinen Lastangriffspunkt auf die Platte. So entsteht unter der lange andauernden Belastung eine Setzungsmulde im Beton unter der Gleitplatte. Als Folge davon liegt der verwendete Gleitwerkstoff nicht mehr sauber sphärisch an seiner Gegenfläche an, sondern drückt sich in das Stahl- oder Gegenmaterial ein.

Neben diesen Setzungen können elastische Verformungen oder Ungenauigkeiten in der Bearbeitung vorliegen, durch die die beiden sphärisch aneinander liegenden Flächen nicht identisch ausgebildet sind. Die beiden Gleitflächen der beiden Gleitmaterialien stimmen damit nicht genau überein.

Im Ergebnis führen diese Einflüsse zu einer Überlastung und langfristig zu einer Beschädigung der Gleitflächen, insbesondere im Bereich der Kanten des aufliegenden Gleitschuhs. Das dünne Material der größeren Gleitfläche verschleißt an diesen Stellen. Somit verändert sich das Reibungsverhalten. Dies führt dazu, dass das Lager im Einsatzfall nicht mehr planmäßig funktioniert.

Auch bei herkömmlichen Verformungsgleitlagern mit elastischer Rückstellung in einer Richtung können Probleme auftreten, wenn die Rückstellung nicht exakt zur Gleichgewichtslinie erfolgt. Dabei können unter anderem Alterungsprozesse des Materials eine Rolle spielen.

Ausgehend davon ist es eine Aufgabe der vorliegenden Erfindung, ein Lager bereitzustellen, das langlebig, robust, wartungsfrei und kostengünstig ist, und mit dem bestehende Gebäude mit geringem Aufwand nachrüstbar sind. Dabei soll eine möglichst exakte Rückstellung in die Gleichgewichtslage auch nach hohen Belastungen und nach längerer Ruhezeit erhalten bleiben.

Diese Aufgabe wird gelöst durch ein Lager für Bauwerke nach Anspruch 1.

Das erfindungsgemäße Lager zum Schutz für Bauwerke ist als Gleitpendellager mit einem Gleitwerkstoff ausgebildet. Es weist eine erste Gleitplatte mit einer ersten konkaven Gleitfläche und einen Gleitschuh auf, der mit der ersten Gleitfläche der ersten Gleitplatte in gleitendem Kontakt steht. Die erste Gleitfläche der ersten Gleitplatte weist eine stabile Gleichgewichtslage für den Gleitschuh auf, in die der Gleitschuh nach einer durch eine äußere Krafteinwirkung verursachten Auslenkung von sich aus zurückkehrt. Der Gleitwerkstoff umfasst einen Kunststoff mit elasto-plastischem Ausgleichsverhalten, der insbesondere geringe Reibung aufweist.

Als Erdbebenschutzlager kann das Lager äußere Einwirkungen kompensieren. Als Einwirkungen, die Erschütterungen verursachen, kommen beispielsweise Erdbeben, aber auch der Aufprall bewegter Massen (z.B. Fahrzeuge, Flugzeuge, Schiffe) in Frage. Auch Explosionen oder in Folge von Explosionen auf ein Gebäude auftreffende Massen können Kräfte auf das Gebäude einwirken, die vom erfindungsgemäßen Lager aufgenommen werden sollen.

Bei einem Gleitpendellager wird wenigstens ein Teil der durch das Erdbeben auf das Gesamtsystem übertragenen kinetischen Energie zunächst in Lageenergie umgesetzt. Dazu bewegt sich unter Einwirkung seitlicher Kräfte auf das Fundament der gebäudeseitige Teil des Lagers aus seiner Gleichgewichtslage, insbesondere aus einer stabilen Gleichgewichtslage, heraus, wobei, analog zu einem Pendel, ein Teil der kinetischen Energie in Lageenergie umgesetzt wird. Ist die größte Auslenkung aus der Gleichgewichtslage (und damit die Position mit größter Lageenergie) erreicht, pendelt die Gebäudemasse relativ zum Gebäudefundament zurück und über den Punkt des stabilen Gleichgewichts auf die andere Seite hinaus. Diese gedämpfte Schwingung setzt sich fort, bis die Masse, wie bei einem Pendel, die zugeführte Anfangsenergie abgegeben hat und in der Gleichgewichtslage zum Stillstand kommt.

Die Oszillationsperiode eines Gleitpendellagers ist, wie bei einem Pendel, von der Masse unabhängig. Damit ist eine optimale Auslegung des Lagers für den Erdbebenschutz möglich. Ferner ist das Lager, das ohnehin gegenüber herkömmlichen Elastomerlagern einen Kostenvorteil mit sich bringt, auch für den Einsatz bei leichten Gebäuden und bei Gebäuden mit sich verändernder Auflast geeignet. Darüber hinaus sorgt das niedrige Profil von Gleitpendellagern dafür, dass bestehende Gebäude kostengünstig nachgerüstet werden können. Der Aufbau des Gleitpendellagers ist insgesamt einfach.

Durch die niedrige Reibungszahl des Gleitwerkstoffs wird ein Gleitpendellager (im Gegensatz zum Reibungspendellager gemäß dem Stand der Technik) erhalten. Je geringer die Reibung eines Gleitpendellagers ist, desto genauer kann - bei verminderter Dissipation - der Gleitschuh in die stabile Gleichgewichtslage zurückkehren. Bei hoher Reibung ist es dagegen wahrscheinlich, dass der Gleitschuh nach Beendigung des Auspendelvorgangs nicht zentriert, sondern (bedingt durch die sehr geringen Steigungen in der Umgebung des Gleichgewichtspunkts) nicht in den Mittelpunkt des Lagers zurückkehrt. Bei einem weiteren Beben ergibt sich das Problem, dass unter Umständen die Lagergröße, insbesondere der Lagerdurchmesser, nicht mehr ausreicht, um die einwirkenden Kräfte aufzunehmen. Im Gegensatz zu herkömmlichen Reiblagern, bei denen das Hauptaugenmerk auf guter Dissipation liegt, werden bei der vorliegenden Erfindung die Reibungszahlen minimiert, um eine Rückkehr des Systems in seine stabile Ausgangsposition sicher zu stellen, so dass das Lager bei einem Nachbeben ohne vorherige Wartung erneut einsatzbereit ist.

Durch die Auswahl eines Gleitwerkstoffs mit elasto-plastischem Ausgleichsverhalten werden weitere Vorteile erzielt. Durch die Weichheit und Anpassungsfähigkeit des Werkstoffs können Ungenauigkeiten kompensiert werden. So werden bei einem elasto-plastischen Verhalten Abweichungen von geometrischen Soll-Werten, beispielsweise vom Soll-Krümmungsradius der Gleitplatte, ausgeglichen. Auf diese Weise ist es leichter, bei der Herstellung und Wartung des Lagers die Maßtoleranzen einzuhalten. Ferner können Defekte, beispielsweise in der Oberflächenstruktur der Gleitfläche, die sowohl herstellungsbedingt als auch längerfristig durch äußere Einwirkungen verursacht sein können, ausgeglichen werden. So kann verhindert werden, dass sich lokale Setzungen und Toleranzen im Krümmungsradius der Gleitfläche negativ auf die Lagereigenschaften auswirken.

Die im Zusammenhang mit dem Stand der Technik beschriebenen Setzungen, die sich aufgrund der kleineren Auflagefläche des Gleitschuhs auf der relativ großen, dünnen Gleitplatte ausbilden, können durch den elasto-plastischen Werkstoff ausgeglichen werden. Ein Ausgleich findet dahin gehend statt, dass der an der Kontaktfläche des Gleitschuhs angeordnete Gleitwerkstoff eine ausreichende Verformbarkeit besitzt, damit die starren Kanten des Trägermateriales nicht in die Gegenfläche eingedrückt werden, wie dies bei einem harten Gleitwerkstoff der Fall wäre. Ein Aufliegen der Kanten des Gleitwerkstoffs auf der Gleitplatte, wodurch das Reibungs- und Verschleißverhalten erheblich verändert werden würde, wird verhindert und so ein relativ ungehindertes Gleiten im Einsatzfall gewährleistet.

Neben dem Einfluss von Setzungsmulden werden auch Abweichungen der beiden aneinender liegenden sphärischen Flächen (nämlich einerseits die Kontaktfläche des Gleitwerkstoffs des Gleitschuhs, andererseits die Gleitfläche der Gleitplatte), sowie elastische Verformungen, bspw. in der Gleitplatte, durch den Gleitwerkstoff mit elasto-plastischem Ausgleichsverhalten ausgeglichen. Somit werden Einflüsse, die dazu führen, dass die Gleitflächen der beiden Gleitmaterialien nicht genau übereinstimmen, kompensiert. Der erfindungsgemäße Gleitwerkstoff mit elasto-plastischem Ausgleichsverhalten sorgt auf diese Weise dafür, dass auch unter Belastung der Gleitwerkstoff sauber sphärisch an der Gleitfläche anliegt.

Das elasto-plastische Ausgleichsverhalten des Gleitwerkstoffs kann erfindungsgemäß Abweichungen von 0,5mm, aber vorzugsweise von 1mm oder sogar 2mm (bezogen auf die Tiefe der Setzungen in der Gleitplatte) kompensieren. D.h. Abweichungen von 0,5mm, vorzugsweise von 1mm, besonders bevorzugt von 2mm, von der Sollebene der Sollgleitfläche können durch die elastischen Eigenschaften des Werkstoffs ausgeglichen werden.

Ferner ist das Bettungsverhalten von Gleitstoffen mit elasto-plastischem Ausgleichsverhalten dem herkömmlicher starrer Gleitwerkstoffe überlegen. Durch die Nachgiebigkeit des Werkstoffs werden Verformungen der Gleitplatte (z.B. Setzungsmulden) ausgeglichen. Die Krümmung einer Gleitplatte kann optimal eingestellt werden, ohne den Verformungen unter Lasteinwirkung Rechnung tragen zu müssen. Die Auslegung des Lagers wird dadurch insgesamt erleichtert.

Ein elasto-plastisches Ausgleichsverhalten des Gleitwerkstoffs bedeutet in diesem Zusammenhang, dass der Gleitwerkstoff nur begrenzt fließt. Der Gleitwerkstoff soll bei einer Belastung des Lagers zwar in den Gleitspalt zwischen den Lagerkomponenten, zwischen denen er angeordnet ist, fließen. Dieses Fließen geht jedoch nicht über einen Punkt hinaus, bei dem eine Berührung der beiden Lagerkomponenten zu befürchten ist.

In der Regel ist der Gleitwerkstoff in die Lagerkomponente eingekammert (d.h. in eine Vertiefung eingelegt), die die kleinere Kontaktfläche der aneinander vorbei gleitenden Lagerkomponenten aufweist. Der in die Vertiefung eingebrachte Gleitwerkstoff weist einen Überstand gegenüber dem Kammerrand auf, der den Abstand zur benachbarten Lagerkomponente und somit die Breite des Gleitspalts bestimmt. Auch bei eingekammertem Gleitwerkstoff fließt der erfindungsgemäße Gleitwerkstoff mit elasto-plastischem Ausgleichsverhalten unter Belastung des Lagers begrenzt in dem Gleitspalt ein. Das Fließen kommt jedoch so ausreichend vor dem Aufsetzen einer Lagerkomponente auf die andere zum Stillstand, dass eine Berührung der beiden Komponenten jedenfalls verhindert wird.

Von den Vorteilen kann auch beim Einsatz des erfindungsgemäßen Gleitpendellagers als Alternative für herkömmliche Verformungsgleitlager profitiert werden.

Der Gleitwerkstoff ist insbesondere in den Gleitebenen an wenigstens der kleineren der Gleitflächen des Gleitschuhs und einer mit dem Gleitschuh in Kontakt stehenden Gleitfläche der Gleitplatte angeordnet. Der Gleitwerkstoff mit elasto-plastischem Ausgleichsverhalten ist weicher bzw. nachgiebiger als der Gegenwerkstoff, der als Gleitfläche für den Gleitwerkstoff vorgesehen ist. Um ein Verhaken oder eine Zerstörung des weicheren Stoffs an Kanten zu verhindern, ist notwendigerweise die kleinere der Flächen mit dem weicheren Stoff zu belegen.

Der Gleitwerkstoff umfasst bevorzugt UHMWPE (Ultra High Molecular Weight Polyethylene), insbesondere besteht er im Wesentlichen aus UHMWPE (Ultra High Molecular Weight Polyethylene).

UHMWPE ist ein Gleitwerkstoff mit elasto-plastischem Ausgleichsverhalten, wie erfindungsgemäß gefordert. Der Gleitkörper kann beispielsweise als thermoplastischer, gesinterter Gleitwerkstoff hergestellt werden. Durch Werkstoffmodifikationen oder durch Veränderungen des Gleitsystems kann die Reibung gezielt eingestellt werden. So kann das UHMWPE mit Schmiermitteln, zumindest im Bereich der Oberfläche, versetzt werden, um einen bestimmten Reibwert, der sowohl den Anforderungen an geringe Reibung als auch den Dissipationseigenschaften Rechnung trägt, gezielt eingestellt werden. Außerdem weist UHMWPE als Gleitwerkstoff die positive Eigenschaft auf, dass der eingestellte Reibwert auch bei niedrigen Temperaturen in hohem Maße stabil bleibt. Weitere Vorteile bestehen in der geringen Alterung von UHMWPE-Werkstoffen. Außerdem ist der Werkstoff verschleißarm, so dass das Lager beispielsweise im Erdbebenschutz bei mehreren Erdbeben zum Einsatz kommen kann.

UHMWPE (Ultra High Molecular Weight Polyethylene) weist Gleiteigenschaften auf, die eine effektive und vollständige Rückführung bzw. Rückstellung in die Ausgangslage nach einem Beben erlauben. Die Funktionalität des Lagers wird somit auch nach einem Beben sichergestellt. Außerdem wird eine Verschiebung des Gebäudes gegenüber seinem Fundament verhindert. Nach dem Beben kann das Lager in seine Solllage zurückzukehren. Ein Auswandern der Nulllage während des Bebens wird verhindert.

Durch das kammerungsbedingt begrenzte Fließen des UHMWPE (Ultra High Molecular Weight Polyethylene) wird ein Ausfließen des Gleitmaterials durch den Gleitspalt auch bei großen Lasten im Wesentlichen verhindert.

UHMWPE (Ultra High Molecular Weight Polyethylene) kann in Reinform, als homogene Mischung mit weiteren Materialien oder im Verbund als heterogenes Werkstück als Gleitwerkstoff eingesetzt werden.

Der Gleitlagerwerkstoff mit UHMWPE (Ultra High Molecular Weight Polyethylene) mit den o.g. Eigenschaften ermöglicht eine einfache Berechnung, Dimensionierung und Auslegung des Lagers im Gegensatz zu den im Stand der Technik bekannten Lagern, insbesondere bei Erdbebenschutzsystemen:
Der Gleitwerkstoff umfasst alternativ bevorzugt PTFE (Polytetrafluorethylen), insbesondere besteht er im Wesentlichen aus PTFE (Polytetrafluorethylen).

Auch PTFE ist einer der Stoffe mit elasto-plastischem Ausgleichsverhalten, die erfindungsgemäß als Gleitwerkstoffe in Lagern Einsatz finden können.

In einer besonderen Ausführungsform weist der Gleitwerkstoff Zusatzkomponenten, insbesondere Schmiermittelkomponenten, auf. Durch Einarbeitung dieser Komponenten in den Gleitwerkstoff kann gezielt der Reibwert eingestellt werden. Insbesondere kann das Rückstellverhalten des Gleitpendellagers durch eine geeignete Auswahl des behandelten Gleitwerkstoffs in Kombination mit den ausgewählten Gegenflächen optimiert werden.

Es ist jedoch auch denkbar, andere physikalische Eigenschaften wie die Steifheit, die Elastizität, die Stabilität oder die Beständigkeit des Werkstoffs durch Zugabe dem Fachmann geläufiger Additive zu verbessern.

Wenigstens in einer Gleitoberfläche des Gleitwerkstoffs können Schmierstoffe eingearbeitet sein. Beispielsweise kann der Gleitwerkstoff ein Sinterkörper sein, in dessen poröse Oberflächenstruktur Schmierstoffe eingebracht werden. Der Werkstoff kann homogen, d.h. mit gleichmäßiger Verteilung verschiedener Materialkomponenten, oder heterogenen, d.h. mit sich ändernder Konzentration der einzelnen Materialkomponenten, ausgebildet sein.

Der Gleitwerkstoff weist bevorzugt eine Reibungszahl in Abhängigkeit von der Flächenpressung des Gleitlagers derart auf, dass das Produkt aus Reibungszahl und Flächenpressung in einem vorgegebenen Flächenpressungsbereich im Wesentlichen konstant ist. Aus dem Produkt aus Reibungszahl und Flächenpressung errechnet sich die Reibungskraft (die als Horizontalkraft im Wesentlichen horizontal gerichtet ist) des Gleitlagers. Die Flächenpressung entspricht dabei der auf das Lager wirkenden Vertikalkraft. Der Vorteil einer konstanten, d.h. von der Flächenpressung unabhängigen Horizontalkraft liegt darin, dass unabhängig vom Gewicht des Gebäudes auf einer vorgegebenen Strecke eine ganz bestimmte Energiemenge dissipiert wird. Bei einem Pendellager wird entsprechend in jedem Schwingungszyklus eine ganz bestimme Energiemenge durch das Lager abgeführt. Dies spielt bspw. eine Rolle bei Gebäuden bzw. Konstruktionen, die verschiedene Beladungszustände aufweisen können (bspw. Tanks). Außerdem kann ein vorher konzipiertes Lager für unterschiedliche Gebäude mit unterschiedlichen Lasten eingesetzt werden. Auf eine Anpassung an die vom Lager aufgenommene Flächenpressung kann verzichtet werden. In anderen Worten ermöglicht dies den Einsatz eines Standardlagers in verschiedenartigen Gebäudestrukturen.

Der Gleitwerkstoff weist vorzugsweise unabhängig von der Geschwindigkeit zwischen den Lagerkomponenten des Gleitlagers eine im Wesentlichen konstante Reibungszahl auf. Diese Eigenschaft des Gleitwerkstoffs wirkt sich im Erdbebenschutz besonders günstig aus, da die Geschwindigkeiten, mit denen die Gebäudeteile bzw. Gebäudeteil und Fundament gegeneinander verschoben werden, schwer prognostizierbar sind. Die Geschwindigkeitsunabhängigkeit der Reibung ermöglicht es, dass Gleitlager in einfacher Weise zu berechnen sind und entsprechend den Anforderungen auszulegen, ohne den Einfluss der Geschwindigkeit berücksichtigen zu müssen.

Das Lager kann bevorzugt einen Gegenwerkstoff aufweisen, mit dem der Gleitwerkstoff in Kontakt steht, wobei der Gegenwerkstoff einen metallischen Werkstoff mit metallischen Gleitschichten umfasst, insbesondere Hartchrom, eloxiertes Aluminium oder Chemisch-Nickel (Nickelphosphat).

Der Gegenwerkstoff kann auch wenigstens ein metallisches Blech umfassen, insbesondere aus poliertem Edelstahlblech.

Das metallische Blech kann unverbunden an der Gleitplatte anliegen, insbesondere eingekammert sein. Sofern das metallische Blech mit der Gleitplatte fest verbunden ist, können Wellen, die sich im Blech ausbreiten, nach außen wandern und die dort vorgesehene Befestigung beschädigen oder lösen. Ein lediglich eingekammertes metallisches Blech dagegen kann frei schwingen und somit die Schwingungsenergie ohne Beschädigung einer Verbindung zu einer der Lagerkomponenten abführen. Aus diesem Grund ist die so genannte "schwimmende Lagerung" des Gegenblechs besonders bevorzugt.

Das Lager weist insbesondere einen Gegenwerkstoff auf, mit dem der Gleitwerkstoff in Kontakt steht, wobei der Gegenwerkstoff einen Kunststoff umfasst, insbesondere aus der Gruppe der Polyamide, Polyoximethylene, Polyethylenterephtalate oder Polybutylenterephtalate. In der Regel ist in allen Fällen der Gegenwerkstoff wenigstens gleich hart oder härter als der Gleitwerkstoff mit seinem elasto-plastischen Ausgleichsverhalten.

Der Gegenwerkstoff weist bevorzugt eine zwischen der Gleichgewichtslage und dem Rand der Gleitfläche variierende Reibungszahl auf. Insbesondere nimmt die Reibungszahl zum Rand der Gleitfläche hin zu. Auf diese Weise wird bei einer verbesserten Isolierung im Zentralbereich der Gleitfläche eine bessere Zentrierung des Gleitschuhs erreicht. Die nach außen hin zunehmende Reibung sorgt in diesen Bereichen für eine bessere Dissipation der erdbebenbedingten Energie durch das Lager.

Das Lager weist insbesondere Reibungswerte von 2% auf. Während im Stand der Technik selbst bei hohen Temperaturen Reibungswerte von 6% kaum unterschritten werden, wird bei den erfindungsgemäß ausgewählten Gleitwerkstoffen eine wesentlich bessere Reibung mit Werten von 5%, 4%, 3% oder 2%, auch bei tiefen Temperaturen, erreicht. Unter einer besseren Reibung versteht man dabei einen absolut geringeren Reibungswert µ, definiert als Quotient aus der Horizontalkraft-Verschiebungs-Hysteresefläche und der zugehörigen Rechteckfläche von maximaler Horizontalkraft und maximaler Horizontalauslenkung. Man erhält ihn gemäß dem nachfolgenden, schematisierten Diagramm aus einem entsprechenden Auslenkungsversuch zu µ = A / (4 * V *D), wobei V die vertikale Lagerbelastung darstellt. Die in diesem Versuch ebenfalls erkennbare Überhöhung der bei jedem Richtungswechsel sowie beim Anfahren zu überwindenden Haftreibungskraft gegenüber der Gleitreibung beträgt bei den erfindungsgemäß ausgewählten Werkstoffen typischerweise weniger als 50% bis 100%, insbesondere nur zwischen 10 und 25%.

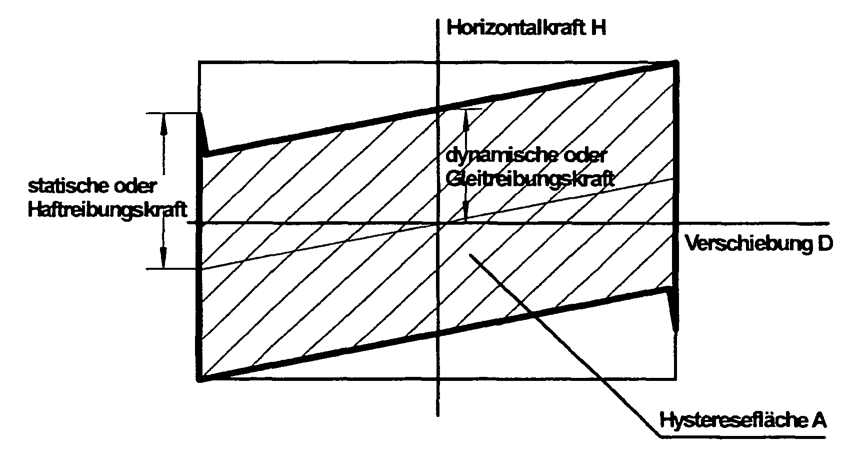

In einer bevorzugten Ausführungsform weist das Lager eine Lagerplatte auf, die über ein Kippgelenk mit dem Gleitschuh relativ zu diesem verkippbar bzw. verschwenkbar angeordnet ist. Das Kippgelenk definiert dabei eine Kippebene, die oberhalb oder unterhalb der durch den Kontakt zwischen Gleitschuh und Gleitfläche definierten Gleitebene angeordnet sein kann. Das Kippgelenk kann beispielsweise als Kugelgelenk mit einer sphärischen Kugelschale ausgebildet sein.

Die Lagerplatte kann oberhalb oder unterhalb des Gleitschuhs angeordnet sein.

Bevorzugt weist das Gleitlager eine zweite Gleitplatte mit einer zweiten konkaven Gleitfläche auf, die in Kontakt mit dem Gleitschuh steht.

Insbesondere ist der Gleitschuh zwischen der ersten Gleitplatte und der zweiten Gleitplatte in gleitendem Kontakt mit der ersten und der zweiten Gleitplatte angeordnet.

Der Gleitschuh kann sowohl gegenüber der ersten Gleitplatte als auch gegenüber der zweiten Gleitplatte verschiebbar und/oder drehbar angeordnet sein. Auf diese Weise nehmen beide Gleitflächen in Kombination Verdrehungen und Verschiebungen des Gleitschuhs auf.

Die erste Gleitfläche und die zweite Gleitfläche können im Wesentlichen gleiche Krümmungen aufweisen. Auf diese Weise werden Verschiebungen des Gleitschuhs gegenüber der Gleichgewichtslage zu gleichen Teilen auf die beiden Gleitflächen verteilt. Ein Vorteil dieser Ausführungsform besteht darin, dass auf ein Kipplager zum Ausgleich von Verkippungen des Gleitschuhs bei Verschiebungen gegenüber der stabilen Gleichgewichtslage verzichtet werden kann. Gegenüber der Lösung mit nur einer Gleitfläche und ortsfestem Kipplager wird zudem die mögliche maximale Auslenkung des Lagers etwa verdoppelt.

Alternativ dazu können die erste Gleitfläche und die zweite Gleitfläche unterschiedliche Krümmungen aufweisen. Bei dieser Ausführungsform findet eine unterschiedliche Aufteilung der Verschiebung auf die beiden Gegenflächen statt.

Insbesondere ist der Gleitschuh wenigstens zweiteilig mit zwei über ein Kippgelenk verbundenen Teilen aufgebaut. Mit Hilfe des Kippgelenks wird gewährleistet, dass auch bei unterschiedlichen Krümmungsradien der beiden Gleitflächen eine Verkippung gegeneinander ermöglicht wird.

Bevorzugt können die erste Gleitfläche und die zweite Gleitfläche unterschiedliche Gleiteigenschaften, insbesondere unterschiedliche Reibungszahlen, aufweisen. Auf diese Weise kann der Gesamtreibwert des Systems gezielt beeinflusst und eingestellt werden.

Der Gleitschuh kann zur Erzielung unterschiedlicher Flächenpressungen an den Kontaktflächen unterschiedlich große Kontaktflächen zur ersten Gleitfläche und zur zweiten Gleitfläche aufweisen. Beispielsweise kann der Durchmesser der an den Gegenflächen anliegenden Gleitwerkstoffe, beispielsweise aus UHMWPE oder PTFE, unterschiedlich gewählt werden. Auch diese Maßnahme erlaubt eine optimale Einstellung des Gesamtverhaltens des Systems.

Wenigstens eine der Gleitflächen kann eine konstante Krümmung aufweisen.

Wenigstens eine der Gleitflächen kann mit einem Übergangsbogen, insbesondere mit einer Klotoide, zur besseren Zentrierung des Gleitschuhs ausgebildet sein. Durch eine funktionale Abhängigkeit des Krümmungsradius von seiner Entfernung zum Lagermittelpunkt bzw. durch die funktionale Abhängigkeit des Krümmungsradius in Abhängigkeit von den Ortskoordinaten kann das Rückstellverhalten des Lagers (in Kombination mit anderen Größen wie der Reibung) eingestellt werden. Eine Klotoide bewirkt ein besonders günstiges Rückstellverhalten.

Im Randbereich der Gleitfläche kann ein Begrenzer zur Begrenzung der Auslenkung des Gleitschuhs gegenüber der Gleichgewichtslage angeordnet sein. Dieser Begrenzer kann bspw. in Form eines Stegs am Rand der Gleitplatten ausgebildet sein. Dadurch wird verhindert, dass der Gleitschuh in Extremsituationen die Gleitplatte verlassen kann. Beim Vorhandensein mehrerer Gleitplatten können selbstverständlich einzelne oder alle dieser Gleitplatten mit einem Begrenzer ausgestattet sein.

Das Lager kann ferner eine Überwachungseinrichtung zur Bestimmung des Zustands des Lagers durch Messung der Dicke des Gleitwerkstoffüberstands über den Rand der Kammerung, in die der Gleitwerkstoff eingelagert ist, bis zur Gleitfläche der entsprechenden Gleitplatte aufweisen. Mit anderen Worten wird die Größe des Gleitspalts zwischen dem Gleitschuh und der Gleitfläche der entsprechenden Gleitplatte, an der der Gleitschuh über den Gleitwerkstoff anliegt, gemessen. Ist der Gleitspalt groß genug, so dass eine Berührung des Gleitschuhs mit der Gleitfläche im Fall eines Erdbeben zuverlässig vermieden wird, kann das Lager als intakt gelten. Ist diese Voraussetzung nicht mehr gegeben, so muss das Lager gewartet werden. Die Überwachungseinrichtung kann also mit einer einfachen Spaltbreitenmessung zuverlässig Aufschluss darüber geben, ob das Lager noch einsatzbereit ist.

In vielen Fällen liefert auch eine einfache Sichtkontrolle ausreichende Ergebnisse zur Beurteilung des Zustands des Lagers. Gegenüber konventionellen Konstruktionen ist damit die Wartung, die sich auf eine Sichtüberwachung beschränken kann, vereinfacht.

Die Gleitfläche kann so ausgebildet sein, dass die Gleichgewichtslage ein Gleichgewichtspunkt ist, so dass bei einer Auslenkung eine Zentrierung in zwei Dimensionen erfolgt. Insbesondere für den Erdbebenschutz ist wenigstens eine Gleitfläche als Kalotte mit einem Gleichgewichtspunkt ausgebildet. Die Rückstellkraft wirkt also in zwei Dimensionen, d.h. die Rückstellung wirkt zur Ausgangsposition zurück.

Wird der Lagertyp beispielsweise als Alternative für ein Verformungsgleitlager entsprechend Nr. 1.5 in EN 1337-1, Tabelle 1, eingesetzt, kann die Gleitfläche so ausgebildet sein, dass die Gleichgewichtslage eine Gleichgewichtslinie ist, so dass bei einer Auslenkung eine Zentrierung in nur einer Dimension erfolgt. Die Gleitfläche kann als Segment einer Zylindermantelfläche mit einer Gleichgewichtslinie parallel zur Zylinderlängsachse ausgebildet sein. Die Rückstellkraft bei einer Auslenkung wirkt in diesem Fall quer zur Zylinderlängsachse, während längs zur Achse Ausgleichsbewegungen ohne Rückstellmoment ermöglicht werden. Man kann das Lager als einachsiges Gleitpendellager bezeichnen. Im Prinzip wird bei einem herkömmlichen Verformungsgleitlager die Rückstellung in einer Dimension durch elastische Gummiverformung bewirkt. Die elastische Rückstellung wird bei der vorliegenden Erfindung durch das Auspendeln in die Gleichgewichtslage ersetzt. In der zweiten Dimension bzw. Richtung kann das Lager dagegen in beiden Fällen praktisch ungehindert gleiten.

Erfindungsgemäß wird das Lager zur Entkopplung des Baugrunds von einem Bauwerk bei Bewegungen und Erschütterungen durch äußere Einflüsse, insbesondere durch Erdbeben, verwendet. Das Lager ist als Teil eines Erdbebenschutzsystems zwischen einem Bauwerksfundament und dem entsprechendem Bauwerk angeordnet. Durch die Verwendung des erfindungsgemäßen Gleitwerkstoffs in Gleitlagern zur Erdbebensicherung, insbesondere im Brückenbau und im Hochbau, wird ein langlebiges, robustes und nahezu wartungsfreies Lager zur Erdbebensicherung bereitgestellt, welches in eine Vielzahl von Erdbebensicherungssystemen integrierbar ist.

Eine alternative Verwendung des Lagers betrifft eine horizontal-elastischen Lagerung von Bauwerksteilen im Bauwesen. Das Lager tritt bei dieser Anwendung an die Stelle eines herkömmlichen Verformungslagers. Insbesondere ist für diese Verwendung das oben beschriebene Gleitpendellager mit einer Gleichgewichtslinie geeignet, so dass in einer Richtung ein Rückstellmoment wirkt, während in der anderen Richtung ein relativ freies Gleiten möglich ist.

Weitere Merkmale und Vorteile der Erfindung werden anhand der nachfolgenden Beschreibung spezieller Ausführungsbeispiele deutlich. Es zeigen:
- Fig. 1a: eine erste Ausführungsform des erfindungsgemäßen Gleitlagers in einer Gleichgewichtsstellung;
- Fig. 1b: das Gleitlager gemäß Fig. 1a bei einer erdbebenverursachten Auslen kung;
- Fig. 2a: eine zweite Ausführungsform des erfindungsgemäßen Gleitlagers in einer Gleichgewichtsstellung;
- Fig. 2b: das Gleitlager gemäß Fig. 2a bei einer erdbebenverursachten Auslenkung; und
- Fig. 3: eine dritte Ausführungsform des erfindungsgemäßen Gleitlagers in einer Gleichgewichtsstellung.

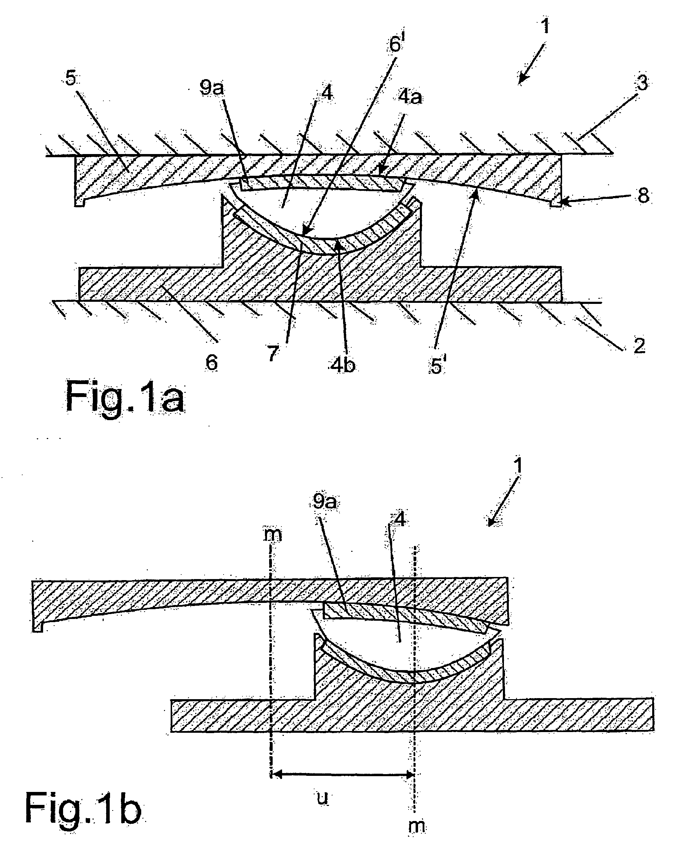

In der Fig. 1a ist ein Gleitpendellager 1 dargestellt, wie es bspw. zum Erdbebenschutz im Hochbau eingesetzt werden kann. Das Lager 1 ist zwischen einem Gebäudefundament 2 und einem Gebäude 3 zur Isolation des Gebäudes 3 vom Fundament 2 gegenüber horizontalen, erdbebenverursachten Erderschütterungen angeordnet.

Das Gebäude 3 ist mit einer oberen Gleitplatte 5 verbunden, die eine konkave, sphärische Gleitfläche 5' aufweist. Die Gleitfläche 5' der oberen Gleitplatte 5 ist beispielsweise mit einem metallischen Werkstoff wie Hartchrom, eloxiertem Aluminium, Chemisch-Nickel u. ä. beaufschlagt.

Insbesondere kann die Gleitplatte 5 mit einem separaten Element, das die Gleitfläche 5' aufweist und einen der genannten Werkstoffe umfasst oder aus diesem besteht, verbunden sein. Als separates Element kommt ein metallisches Blech, beispielsweise ein poliertes Edelstahlblech, in Frage.

In einer besonderen Ausführungsform ist das separate Element nicht Teil der Gleitplatte 5 oder mit dieser verbunden, sondern lediglich in eine entsprechende Kammerung eingelegt und durch diese gegenüber seitlichen Verschiebungen entlang der Oberfläche der Gleitplatte 5 gesichert. Bei dieser Lagerung besteht jedoch für das separate Element ein gewisser Bewegungsspielraum, so dass äußere Kräfte und Erschütterungen, die auf die das Element übertragen werden und Schwingungen erzeugen, keine Beschädigung an der Befestigung verursachen können.

Eine untere Platte 6 ist mit dem Gebäudefundament 2 verbunden. Die untere Platte 6 weist einen konkaven, sphärisch ausgebildeten Teil auf, der eine Kippfläche 6' umfasst.

Ein in seiner Form an die Gleitfläche 5' bzw. Kippfläche 6' angepasster Gleitschuh 4 ist zwischen der Gleitplatte 5 und der Platte 6 angeordnet. Der Gleitschuh 4 weist eine obere Kontaktfläche 4a zum Kontakt mit der oberhalb des Gleitschuhs 4 angeordneten Gleitfläche 5' und eine untere Kontaktfläche 4b zum Kontakt mit der unterhalb des Gleitschuhs 4 angeordneten Kippfläche 6' auf. Im Bereich seiner unteren Kontaktfläche 4b ist der Gleitschuh 4 konvex sphärisch mit in etwa gleichem Radius wie die entsprechende sphärische Kippfläche 6' geformt. Auf diese Weise kann der Gleitschuh 4 gegenüber der Platte 6 verkippt werden.

Die Kippfläche 6', die mit dem Gleitschuh in Kontakt steht, besteht jedenfalls aus einem Gegenwerkstoff, der ein Verkippen des Gleitschuhs 4 ermöglicht. Insbesondere kann, wie in der Fig. 1a dargestellt, die Kippfläche 6' durch ein in der Platte 6 eingekammertes erstes Gleitelement 7 gebildet werden. Das erste Gleitelement 7 kann aus jedem geeigneten Gleitwerkstoff, wie z.B. PTFE (Polytetrafluorethylen) oder UHMWPE (Ultra High Molecular Weight Polyethylene), bestehen. Es sei jedoch hervorgehoben, dass dieses Gleitelement auch aus anderen, nicht elastischen Werkstoffen hergestellt sein kann, so lange nur eine Verkippung ermöglicht wird.

Ferner steht der Gleitschuh 4 über eine obere Kontaktfläche 4a mit der Gleitfläche 5' der Gleitplatte 5 in gleitendem Kontakt. Die Krümmung der Kontaktfläche 4a des Gleitschuhs 4 ist dabei an die Krümmung der Gleitfläche 5' angepasst. Die Krümmung der Gleitfläche 5' ist relativ klein gewählt, d.h. der Krümmungsradius ist groß gegenüber der horizontalen Ausdehnung der Gleitplatte 5. Dies führt dazu, dass die Gleitplatte 5 gegenüber der unterhalb des Gleitschuhs 4 angeordneten Kippplatte 6 bei äußerer Krafteinwirkung, bspw. durch ein Erdbeben, im Wesentlichen horizontale Relativbewegungen durchführen kann. Damit können durch Erdstöße verursachte horizontale Erschütterungen des Fundaments 2 gegenüber dem Gebäude 3 abgefangen bzw. ausgeglichen werden, da das Gebäude 3 bei einer horizontalen Auslenkung des Fundaments 2 aufgrund seiner Trägheitskraft seine Lage im Großen und Ganzen beibehält. Die seitliche Auslenkung des Gleitschuhs 4 relativ zur Gleitplatte 5 wird durch einen äußeren Begrenzer 8 am äußeren Rand der Gleitfläche 5' begrenzt.

Wesentlich für die Erfindung ist, dass die obere Kontaktfläche 4a des Gleitschuhs durch ein zweites Gleitelement 9a gebildet wird. Das zweite Gleitelement 9a ist im Gleitschuh 4 eingekammert. Das zweite Gleitelement 9a besteht aus einem Gleitwerkstoff, der einen Kunststoff geringer Reibung mit elasto-plastischem Ausgleichsverhalten aufweist. Der Gleitwerkstoff weist ein geeignetes Fließverhalten auf, d.h. er wird unter Belastung bis zu einem gewissen Grad in den Gleitspalt zwischen dem Grundkörper des Gleitschuhs 4 und der Gleitfläche 5' gepresst, allerdings nur so stark, dass ein Aufsetzen der Gleitfläche 5' auf den Grundkörper des Gleitschuhs 4 ausgeschlossen ist.

Als Gleitwerkstoffe für das zweite Gleitelement 9a eignen sich Materialien wie PTFE (Polytetrafluorethylen), UHMWPE (Ultra High Molecular Weight Polyethylene) oder Werkstoffe, die wenigstens einen Anteil an PTFE (Polytetrafluorethylen) und/oder UHMWPE (Ultra High Molecular Weight Polyethylene) umfassen. Insbesondere kann ein Gleitelement 9a aus UHMWPE (Ultra High Molecular Weight Polyethylene) durch Sintern hergestellt sein. Der Werkstoff selbst kann bei Bedarf mit Schmiermitteln oder Additiven versetzt werden. So kann der Gleitwerkstoff als poröser Sinterwerkstoff ausgebildet sein, in dessen Oberfläche Schmierstoffe eingelagert sind. Das Gleitelement 9a kann ferner Taschen an der Kontaktfläche zur Gleitfläche 5' zur Aufnahme von Schmierstoffen aufweisen.

Das Gleitelement 9a ist für eine hohe vertikale Lastaufnahme geeignet. Der Gleitwerkstoff gleicht außerdem durch sein nicht starres, sondern relativ elastisches Verhalten, Eindrücke aus, die in konventionellen Lagern durch hohe Flächenpressung entstehen können. So kann sich der nachgiebige Werkstoff an Setzungsmulden anpassen, Fehler in der Oberflächenbeschaffenheit der Gleitfläche 5' oder Abweichungen im Krümmungsradius der Gleitfläche 5' ausgleichen. Der Krümmungsradius der Gleitfläche 5' kann optimal eingestellt werden, ohne möglichen Verformungen der Gleitplatte 5' Rechnung tragen zu müssen. Insgesamt sind Fertigungstoleranzen bei der Montage des Lagers leichter einzuhalten.

Außerdem ist die Reibungszahl des Gleitwerkstoffs 9a, auch bei niedrigen Außentemperaturen, erfindungsgemäß gegenüber herkömmlichen Lagern niedrig. Neben hoher Temperaturstabilität zeichnen sich die Gleitwerkstoffe durch geringe Alterung und hohe Verschleißfestigkeit aus. Der Gleitwerkstoff UHMWPE sorgt damit für ein langlebiges, robustes und relativ wartungsfreies Erdbebenlager.

Durch die geringe Reibung zwischen der Kontaktfläche 4a und der Gleitfläche 5' wird das Rückstellverhalten des Lagers verbessert. Dies bedeutet, dass das Lager 1 nach einer Erderschütterung auspendelt und der Gleitschuh 4 relativ genau im Zentrum (d.h. in einer stabilen Gleichgewichtsstellung) der Gleitplatte 5 zur Ruhe kommt. Damit ist das Lager 1 nach der Erschütterung ohne weitere Einstellungen bzw. ohne einen Eingriff von außen wieder betriebsbereit.

Im vorliegenden Ausführungsbeispiel ist die Gleitebene (entsprechend der Gleitfläche 5') oberhalb der Kippebene (entsprechend der Kippfläche 6') angeordnet. Dem Fachmann ist jedoch klar, dass die Kippebene auch oberhalb des Gleitschuhs und die Gleitebene (entsprechend der Gleitfläche) unterhalb davon angeordnet sein können.

Das in der Fig. 1a gezeigte Gleitpendellager befindet sich in einer stabilen Gleichgewichtslage. Dies bedeutet, dass die potentielle Energie des Gesamtsystems minimal ist. Der Schwerpunkt des Systems befindet sich in einer (wenigstens lokal) tiefsten Lage.

Die Fig. 1b zeigt dagegen einen Fall, in dem sich das System in einem Nicht-Gleichgewichtszustand befindet. Bei dem Gleitpendellager 1 ist der Gleitschuh 4 um einen Betrag u im Wesentlichen seitlich horizontal aus seiner Gleichgewichtslage m verschoben. Durch die Krümmung der Gleitfläche 5' von ihrem Mittelpunkt m nach außen hat sich auch der Schwerpunkt des Gleitschuhs 4 (sowie aller von ihm getragenen Komponenten) nach oben verschoben. Dadurch ist kinetische Energie, die durch das Erdbeben in das Fundament 2 eingeführt wurde, zunächst in Lageenergie umgesetzt worden. Nach dem Erdstoß bewegt sich der Gleitschuh 4 wieder in Richtung der Gleichgewichtslage zurück und pendelt im Folgenden so lange aus, bis die durch den Erdstoß in das System eingeführte Energie vom Lager 1 abgeführt worden ist.

Die Schwingungsfrequenz des Systems ist, wie bei einem Pendel, unabhängig von der Masse des Systems. Dadurch wird eine optimale Auslegung des Erdbebenlagers ermöglicht. Insbesondere ist das Lager auch für leichte Gebäude geeignet.

Die Rückstellkraft hängt vom Krümmungsradius der Gleitfläche 5' sowie von den Gleiteigenschaften des Gleitwerkstoffs 9a ab. Erfindungsgemäß wird ein elastischplastisch verformbarer Werkstoff 9a mit geringer Reibung verwendet. Dadurch werden nicht nur reibungsarme horizontale Verschiebungen des Gebäudes 3 relativ zum Fundament 2 ermöglicht, sondern es werden auch hohe Rückstellkräfte bei einer Auslenkung wirksam, die die Reibung zwischen Gleitschuh 4 und Gleitfläche 5' überwinden und so den Gleitschuh 6 in seine stabile Ausgangslage zurückführen können.

Dieser Aspekt sorgt dafür, dass nach dem Erdbeben eine Verschiebung des Gebäudes 3 gegenüber dem Fundament 2 praktisch ausgeschlossen ist. Damit erübrigen sich aufwendige Nacharbeiten nach einem Erdbeben. Ferner kann die Erdbebensicherung über einen langen Zeitraum, insbesondere auch über einen Zeitraum mit mehreren Erdbeben, ohne Nacharbeit und ohne Verlust der Funktionalität eingesetzt werden. Die Wartungsarbeiten beschränken sich auf eine einfache Sichtüberprüfung der Lager.

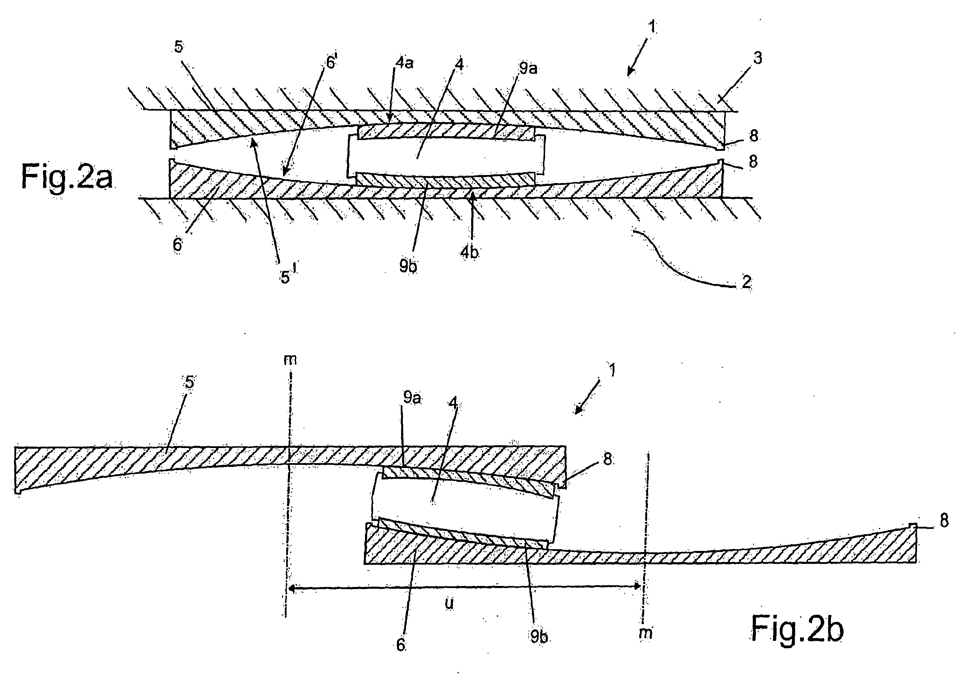

In den Fig. 2a und 2b ist ein weiteres Ausführungsbeispiel eines Gleitpendellagers 1 gemäß der Erfindung dargestellt.

Das zwischen einem Gebäudefundament 2 und einem Gebäude 3 angeordnete Lager 1 weist eine erste Gleitplatte 5 mit einer ersten konkaven, sphärischen Gleitfläche 5' auf.

Im Gegensatz zu dem ersten Ausführungsbeispiel weist jedoch das Lager 1 in der zweiten Ausführungsform statt der Platte 6 mit der Kippfläche 6' eine zweite Gleitplatte 6 mit einer zweiten Gleitfläche 6' auf, die mit dem Gebäudefundament 2 verbunden ist. Damit sind statt einer Gleitebene und einer Kippebene (wie in der Fig. 1) zwei Gleitebenen 5' und 6' vorgesehen. Die Gleitflächen 5' und 6' können wie die im Zusammenhang mit der Fig. 1a beschriebene Gleitfläche 5' ausgebildet und angeordnet sein. Die Flächen 5' und 6' weisen in dieser Ausführungsform denselben Krümmungsradius auf.

Ein Gleitschuh 4 ist zwischen der Gleitplatte 5 und der Gleitplatte 6 angeordnet. Der Gleitschuh 4 weist eine erste Kontaktfläche 4a zum Kontakt mit der ersten Gleitfläche 5' und eine zweite Kontaktfläche 4b zum Kontakt mit der zweiten Gleitfläche 6' auf.

Die Kontaktflächen4a und 4b werden in dem Ausführungsbeispiel durch die Oberflächen eines ersten Gleitelements 9a und eines zweiten Gleitelements 9b gebildet. Die Gleitkörper 9a und 9b sind als Blöcke oder Scheiben ausgebildet. Wie das in der Figur 1a beschriebene Gleitelement 9a bestehen die Gleitelemente 9a und 9b aus einem geeigneten Gleitwerkstoff, wie z.B. PTFE (Polytetrafluorethylen) oder UHMWPE (Ultra High Molecular Weight Polyethylene), mit elasto-plastischem Ausgleichsverhalten und relativ niedriger Reibung gegenüber der entsprechenden Gegenfläche 5' bzw. 6'. Die Gleitelemente 9a und 9b sind an der Oberseite des Grundkörpers des Gleitschuhs 4 bzw. an dessen Unterseite eingekammert.

Hinsichtlich des Materials, der Anordnung und der Eigenschaften der Gleitelemente 9a und 9b sei auf die Ausführungen zum Gleitelement 9a im Zusammenhang mit den Fig. 1a und 1b verwiesen. Gleiches gilt für die Gegenflächen 5' und 6', die insbesondere wie die Gleitfläche 5' aus Fig. 1a bzw. 1b ausgebildet und entsprechend angeordnet sind. Die Gleitelemente 9a und 9b können identisch, aber auch unterschiedlich hinsichtlich des Materials, der Größe der Kontaktoberfläche, der (beispielsweise durch Schmiermittel/Materialwahl) eingestellten Reibung, usw. sein.

In der Fig. 2a ist das Lager 1 in einem Gleichgewichtszustand dargestellt. Die Fig. 2b zeigt stattdessen ein durch einen Erdstoß maximal horizontal ausgelenktes Lager 1. Die Auslenkung wird durch an den äußeren Rändern der Gleitflächen 5' und 6' angeordnete Begrenzer 8 begrenzt. Wie aus der Figur 2b deutlich wird, ist die maximale Auslenkung u, bei sonst gleicher Dimensionierung des Lagers 1, etwa doppelt so groß wie im Fall der Figur 1a. Die Gesamtauslenkung u verteilt sich gleichmäßig auf die Platten 5 und 6.

Die Verkippung des Gleitschuhs 4 wird im Fall der Fig. 2b dadurch ausgeglichen, dass die Gleitplatten 5 und 6 gleichen Krümmungsradius aufweisen. Eine Verkippung des Gleitschuhs 4 gegenüber der ersten Platte 5 wird durch eine entsprechende, entgegen gesetzte Verkippung des Gleitschuhs 4 gegenüber der zweiten Platte 6 ausgeglichen.

Da das Gebäude 3 bei einem Erdstoß aufgrund seiner Trägheit in seiner ursprünglichen Lage verbleibt, kommt es zu einer Relativverschiebung zwischen Gebäude 3 und Fundament 2, und somit zwischen den Gleitplatten 5 und 6. Das Gleitpendellager 1 mit dem Gleitlagerwerkstoff der Gleitelemente 9a und 9b sorgt für eine relative, im Wesentlichen horizontale Verschiebung der beiden Komponenten 5 und 6 gegeneinander. Auf diese Weise wird das Bauwerk vom Untergrund isoliert, bzw. entkoppelt.

Nach dem Erdstoß oszilliert das Gebäude 3 zusammen mit dem Gleitschuh 4 um die mittige Gleichgewichtslage m. Die dem System durch den Erdstoß zugeführte Energie wird dabei durch Reibungskräfte in Wärme umgewandelt und über das Lager 1 abgeführt. Auf diese Weise wird die Schwingung des Gleitpendellagers 1 gedämpft. Durch die Verwendung von Werkstoffzusammensetzungen für die Lagerelemente 9a und 9b mit elasto-plastischem Ausgleichsverhalten und geringer Reibung zwischen den Gleitflächen 5', 6' und dem Gleitschuh 4 werden das Gleitverhalten (zentrierte Rückstellung) und das Setzungsverhalten wesentlich verbessert.

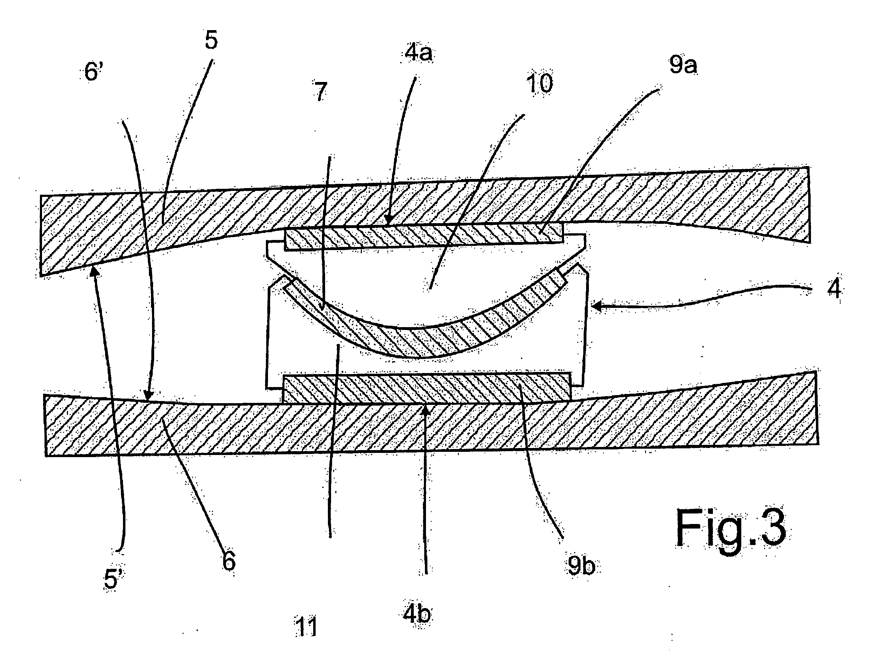

Die Fig. 3 zeigt eine Kombination der Ausführungsformen der Fig. 1a und 2a.

Zwischen zwei wie oben beschriebenen Gleitplatten 5 und 6 ist ein zweiteiliger Gleitschuh 4 angeordnet. Dieser weist einen oberen Teil 10 auf, der etwa wie der Gleitschuh 4 aus der Fig. 1a ausgebildet ist. Mit einer oberen Kontaktfläche 4a steht der Gleitschuh 4 mit der ersten Gleitfläche 5' in Kontakt. Wie vorher beschrieben, wird die Gleitfläche 4a des Gleitschuhs 4 durch ein erstes Gleitelement 9a mit den im Zusammenhang mit dieser Erfindung beschriebenen Eigenschaften gebildet.

Ein zweiter, unterhalb des ersten Teils 10 des Gleitschuhs 4 angeordneter Teil 11 steht über eine zweite Kontaktfläche 4b mit einer unteren Gleitfläche 6' der unteren Gleitplatte 6 in Kontakt. Auch die untere Kontaktfläche 4b wird durch ein Gleitelement 9b gebildet, das die Eigenschaften des erfindungsgemäßen Gleitwerkstoffs aufweist.

Bei dieser Ausführungsform können die obere und die untere Gleitfläche 5' und 6' mit unterschiedlichem Krümmungsradius ausgebildet und das Lager 1 so optimal an die technischen Erfordernisse angepasst werden.

Eine Verkippung der oberen Gleitplatte 5 gegenüber der unteren Gleitplatte 6 wird in diesem Fall durch eine kugelgelenkartige Lagerung des oberen Teils 10 des Gleitschuhs 4 gegenüber dem unteren Teil 11 des Gleitschuhs 4 bewerkstelligt. Zwischen dem oberen Teil 10 und dem unteren Teil 11 kann, muss jedoch im Rahmen dieser Erfindung nicht notwendigerweise, ein Gleitwerkstoff 7 angeordnet sein. Der Gleitwerkstoff 7 kann die Eigenschaften des Gleitwerkstoffs 7, wie er im Zusammenhang mit der Fig. 1 a beschrieben wurde, besitzen.

Beim Einsatz des Gleitpendellagers als Ersatz für ein herkömmliches Verformungsgleitlager gemäß Nr. 1.5 in EN 1337-1, Tabelle 1, können die Abbildungen entsprechend als Querschnitte durch das Lager angesehen werden. In Längsrichtung wäre dagegen das Lager 1 so ausgebildet, dass ein freies Gleiten ermöglicht wäre. In diesem Fall ist statt eines Gleichgewichtspunkts (wie z.B. bei einer als Kalotte ausgebildeten Gleitplatte) eine Gleichgewichtslinie vorgesehen. Beispielsweise könnte die Gleitplatte als konkave Zylinderfläche mit einer Tiefstlinie ausgebildet sein. Gegenüber einem herkömmlichen Verformungsgleitlager ergeben sich auch bei dieser Anwendung verbesserte Zentrierung sowie eine genauere und flexiblere Auslegung des Lagers hinsichtlich der Anforderungen.

## Patentansprüche

1. Lager (1) zum Schutz für Bauwerke (3), wobei das Lager (1) als Gleitpendellager mit einem Gleitwerkstoff (9a, 9b) ausgebildet ist, eine erste Gleitplatte (5) mit einer ersten konkaven Gleitfläche (5') und einen Gleitschuh (4) aufweist, der mit der ersten Gleitfläche (5') der ersten Gleitplatte (5) in gleitendem Kontakt steht, und die erste Gleitfläche (5') der ersten Gleitplatte (5) eine in wenigstens einer Dimension stabile Gleichgewichtslage für den Gleitschuh (4) aufweist, in die der Gleitschuh (4) nach einer durch eine äußere Krafteinwirkung verursachten Auslenkung von sich aus zurückkehrt,
**dadurch gekennzeichnet, dass**
der Gleitwerkstoff (9a, 9b) einen Kunststoff mit elasto-plastischem Ausgleichsverhalten, insbesondere einen Kunststoff mit geringer Reibung, umfasst, wobei das elasto-plastische Ausgleichsverhalten derart ausgeprägt ist, dass Abweichungen von 0,5 mm von der Sollebene der Sollgleitfläche (5') ausgeglichen werden können.

2. Lager (1) nach Anspruch 1, **dadurch gekennzeichnet, dass** der Gleitwerkstoff (9a, 9b) in den Gleitebenen an wenigstens der kleineren der Gleitflächen (4a, 4b) des Gleitschuhs (4) und einer mit dem Gleitschuh in Kontakt stehenden Gleitfläche (5') einer Gleitplatte (5) angeordnet ist.

3. Lager (1) nach Anspruch 1 oder 2, **dadurch gekennzeichnet, dass** der Gleitwerkstoff (9a, 9b) ein elasto-plastisches Ausgleichsverhalten derart aufweist, dass Abweichungen von 1mm, besonders bevorzugt von 2mm, von der Sollebene der Sollgleitfläche (5') ausgeglichen werden können.

4. Lager (1) nach einem der vorhergehenden Ansprüche, **dadurch gekennzeichnet, dass** der Gleitwerkstoff (9a, 9b) UHMWPE (Ultra High Molecular Weight Polyethylene) umfasst, insbesondere im Wesentlichen aus UHMWPE (Ultra High Molecular Weight Polyethylene) besteht.

5. Lager (1) nach einem der Ansprüche 1, 2 oder 3, **dadurch gekennzeichnet, dass** der Gleitwerkstoff (9a, 9b) PTFE (Polytetrafluorethylen) umfasst, insbesondere im Wesentlichen aus PTFE (Polytetrafluorethylen) besteht.

6. Lager (1) nach einem der vorhergehenden Ansprüche, **dadurch gekennzeichnet, dass** der Gleitwerkstoff (9a, 9b) Zusatzkomponenten, insbesondere Schmiermittelkomponenten, aufweist.

7. Lager (1) nach einem der vorhergehenden Ansprüche, **dadurch gekennzeichnet, dass** wenigstens in einer Gleitoberfläche des Gleitwerkstoffs (9a, 9b) Schmierstoffe eingearbeitet sind.

8. Lager (1) nach einem der vorhergehenden Ansprüche, **dadurch gekennzeichnet, dass** der Gleitwerkstoff (9a, 9b) eine Reibungszahl in Abhängigkeit von der Flächenpressung des Gleitlagers (1) derart aufweist, dass das Produkt aus Reibungszahl und Flächenpressung in einem vorgegebenen Flächenpressungsbereich im Wesentlichen konstant ist.

9. Lager (1) nach einem der vorhergehenden Ansprüche, **dadurch gekennzeichnet, dass** der Gleitwerkstoff (9a, 9b) unabhängig von der Gleitgeschwindigkeit zwischen den Lagerkomponenten des Gleitlagers (1) eine im Wesentlichen konstante Reibungszahl aufweist.

10. Lager (1) nach einem der vorhergehenden Ansprüche, **dadurch gekennzeichnet, dass** das Lager (1) einen Gegenwerkstoff aufweist, mit dem der Gleitwerkstoff (9a, 9b) in Kontakt steht, wobei der Gegenwerkstoff einen metallischen Werkstoff mit metallischen Gleitschichten umfasst, insbesondere Hartchrom, eloxiertes Aluminium oder Chemisch-Nickel (Nickelphosphat).

11. Lager (1) nach einem der vorhergehenden Ansprüche 1 bis 9, **dadurch gekennzeichnet, dass** das Lager (1) einen Gegenwerkstoff aufweist, mit dem der Gleitwerkstoff (9a, 9b) in Kontakt steht, wobei der Gegenwerkstoff wenigstens ein metallisches Blech umfasst, insbesondere aus poliertem Edelstahlblech.

12. Lager (1) nach Anspruch 11, **dadurch gekennzeichnet, dass** das metallische Blech unverbunden an der Gleitplatte (5) anliegt, insbesondere eingekammert ist.

13. Lager (1) nach einem der vorhergehenden Ansprüche 1 bis 9, **dadurch gekennzeichnet, dass** das Lager (1) einen Gegenwerkstoff aufweist, mit dem der Gleitwerkstoff (4a, 4b) in Kontakt steht, wobei der Gegenwerkstoff einen Kunststoff umfasst, insbesondere aus der Gruppe der Polyamide, Polyoximethylene, Polyethylenterephtalate oder Polybutylenterephtalate.

14. Lager (1) nach einem der vorhergehenden Ansprüche 10 bis 13, **dadurch gekennzeichnet, dass** der Gegenwerkstoff eine zwischen der Gleichgewichtslage und dem Rand der Gleitfläche (5') variierende Reibungszahl, insbesondere eine zum Rand hin im wesentlichen zunehmende Reibungszahl, aufweist.

15. Lager (1) nach einem der vorhergehenden Ansprüche, **dadurch gekennzeichnet, dass** das Lager (1) minimale Reibungswerte von 2 % und/oder größer aufweist.

16. Lager (1) nach einem der vorhergehenden Ansprüche, **dadurch gekennzeichnet, dass** das Verhältnis zwischen statischer Reibungszahl und dynamischer Reibungszahl des Lagers (1) weniger als 100%, bevorzugt weniger als 50%, beträgt, insbesondere einen Wert zwischen 10% und 25% aufweist.

17. Lager (1) nach einem der vorhergehenden Ansprüche, **dadurch gekennzeichnet, dass** das Lager (1) eine Lagerplatte (6) aufweist, die über ein Kippgelenk mit dem Gleitschuh (4) relativ zu diesem verkippbar bzw. verschwenkbar angeordnet ist.

18. Lager (1) nach Anspruch 17, **dadurch gekennzeichnet, dass** die Lagerplatte (6) oberhalb des Gleitschuhs (4) angeordnet ist.

19. Lager (1) nach Anspruch 17, **dadurch gekennzeichnet, dass** die Lagerplatte (6) unterhalb des Gleitschuhs (4) angeordnet ist.

20. Lager (1) nach einem der vorhergehenden Ansprüche 1 bis 17, **dadurch gekennzeichnet, dass** das Gleitlager (1) eine zweite Gleitplatte (6) mit einer zweiten konkaven Gleitfläche (6') aufweist, die im Kontakt mit dem Gleitschuh (4) steht.

21. Lager (1) nach Anspruch 20, **dadurch gekennzeichnet, dass** der Gleitschuh (4) zwischen der ersten Gleitplatte (5) und der zweiten Gleitplatte (6) in gleitendem Kontakt mit der ersten und der zweiten Gleitplatte (5, 6) angeordnet ist.

22. Lager (1) nach Anspruch 21, **dadurch gekennzeichnet, dass** der Gleitschuh (4) sowohl gegenüber der ersten Gleitplatte (5) als auch gegenüber der zweiten Gleitplatte (6) verschiebbar und/oder drehbar angeordnet ist.

23. Lager (1) nach einem der Ansprüche 20 bis 22, **dadurch gekennzeichnet, dass** die erste Gleitfläche (5') und die zweite Gleitfläche (6') im Wesentlichen gleiche Krümmungen aufweisen.

24. Lager (1) nach einem der Ansprüche 20 bis 22, **dadurch gekennzeichnet, dass** die erste Gleitfläche (5') und die zweite Gleitfläche (6') unterschiedliche Krümmungen aufweisen.

25. Lager (1) nach einem der Ansprüche 20 bis 24, **dadurch gekennzeichnet, dass** der Gleitschuh (4) wenigstens zweiteilig mit zwei über ein Kippgelenk verbundenen Teilen (10, 11) aufgebaut ist.

26. Lager (1) nach einem der Ansprüche 20 bis 25, **dadurch gekennzeichnet, dass** die erste Gleitfläche (5') und die zweite Gleitfläche (6') unterschiedliche Gleiteigenschaften, insbesondere unterschiedliche Reibungszahlen, aufweisen.

27. Lager (1) nach einem der Ansprüche 20 bis 26, **dadurch gekennzeichnet, dass** der Gleitschuh (4) zur Erzielung unterschiedlicher Flächenpressungen an den Kontaktflächen unterschiedlich große Kontaktflächen zur ersten Gleitfläche (5') und zur zweiten Gleitfläche (6') aufweist.

28. Lager (1) nach einem der vorhergehenden Ansprüche, **dadurch gekennzeichnet, dass** wenigstens eine der Gleitflächen (5', 6') eine konstante Krümmung aufweist.

29. Lager (1) nach einem der vorhergehenden Ansprüche, **dadurch gekennzeichnet, dass** wenigstens eine der Gleitflächen (5', 6') mit einem Übergangsbogen, insbesondere mit einer Klotoide, zur besseren Zentrierung des Gleitschuhs (4) ausgebildet ist.

30. Lager (1) nach einem der vorhergehenden Ansprüche, **dadurch gekennzeichnet, dass** im Randbereich der ersten Gleitfläche (5') ein Begrenzer (8) zur Begrenzung der Auslenkung des Gleitschuhs (6) gegenüber der Gleichgewichtslage angeordnet ist.

31. Lager (1) nach einem der vorhergehenden Ansprüche, **dadurch gekennzeichnet, dass** das Lager (1) eine Überwachungseinrichtung zur Bestimmung des Zustands des Lagers (1) durch Messung der Dicke des Gleitwerkstoffüberstands über den Rand der Kammerung, in die der Gleitwerkstoff eingelagert ist, bis zur Gleitfläche (5', 6') der entsprechenden Gleitplatte (5, 6) aufweist.

32. Lager (1) nach einem der vorhergehenden Ansprüche, **dadurch gekennzeichnet, dass** die Gleitfläche (5', 6') so ausgebildet ist, dass die Gleichgewichtslage ein Gleichgewichspunkt ist, so dass bei einer Auslenkung eine Zentrierung in zwei Dimensionen erfolgt.

33. Lager (1) nach einem der vorhergehenden Ansprüche 1 bis 31, **dadurch gekennzeichnet, dass** die Gleitfläche (5', 6') so ausgebildet ist, dass die Gleichgewichtslage eine Gleichgewichslinie ist, so dass bei einer Auslenkung eine Zentrierung in einer Dimension erfolgt.

34. Verwendung eines Lagers (1) nach einem der vorhergehenden Ansprüche 1 bis 32 zur Entkopplung des Baugrunds (2) von einem Bauwerk (3) bei Bewegungen und Erschütterungen durch äußere Einflüsse, insbesondere durch Erdbeben.

35. Verwendung eines Lagers (1) nach Anspruch 33 zu einer einachsig horizontal-elastischen Lagerung von Bauwerksteilen im Bauwesen.

## Claims

1. A bearing (1) for protection for building structures (3), wherein the bearing (1) is constructed in the form of a friction pendulum bearing with a sliding material (9a, 9b) and has a first sliding plate (5) with a first concave sliding surface (5') and a sliding shoe (4), which is in sliding contact with the first sliding surface (5') of the first sliding plate (5), and the first sliding surface (5') of the first sliding plate (5) has an equilibrium position, which is stable in at least one dimension, for the sliding shoe (4), into which the sliding shoe (4) returns automatically after a deflection caused by the action of an external force, **characterised in that** the sliding material (9a, 9b) comprises a plastic material with elasto-plastic compensating behaviour, particularly a plastic with low friction, wherein the elasto-plastic compensating behaviour is so pronounced that deviations of 0.5mm from the nominal plane of the nominal sliding surface (5') can be compensated for.

2. A bearing (1) as claimed in Claim 1, **characterised in that** the sliding material (9a, 9b) is arranged in the sliding planes at at least the smaller of the sliding surfaces (4a, 4b) of the sliding shoe (4) and a sliding surface (5'), which is in contact with the sliding shoe, of a sliding plate (5).

3. A bearing (1) as claimed in Claim 1 or 2, **characterised in that** the sliding material (9a, 9b) has an elasto-plastic compensation behaviour such that deviations of 1mm, particularly preferably of 2mm, from the nominal plane of the nominal sliding surface (5') can be compensated for.

4. A bearing (1) as claimed in one of the preceding claims, **characterised in that** the sliding material (9a, 9b) includes UHMWPE (Ultra High Molecular Weight Polyethylene) and, in particular, substantially consists of UHMWPE (Ultra High Molecular Weight Polyethylene).

5. A bearing (1) as claimed in Claims 1, 2 or 3, **characterised in that** the sliding material (9a, 9b) includes PTFE (Polytetrafluorethylene) and, in particular, substantially consists of PTFE (Polytetrafluorethylene).

6. A bearing (1) as claimed in one of the preceding Claims, **characterised in that** the sliding material (9a, 9b) includes additional components, particularly lubricant components.

7. A bearing (1) as claimed in one of the preceding Claims, **characterised in that** lubricants are worked into at least one sliding surface of the sliding material (9a, 9b).

8. A bearing (1) as claimed in one of the preceding Claims, **characterised in that** the sliding material (9a, 9b) has a coefficient of friction independent of the surface pressure of the friction bearing such that the product of the coefficient of friction and surface pressure is substantially constant in a predetermined range of surface pressure.

9. A bearing (1) as claimed in one of the preceding Claims, **characterised in that** the sliding material (9a, 9b) has a substantially constant coefficient of friction independent of the sliding speed between the bearing components of the friction bearing (1).

10. A bearing (1) as claimed in one of the preceding Claims, **characterised in that** the bearing (1) has a counter material, with which the sliding material (9a, 9b) is in contact, wherein the counter material includes a metallic material with metallic sliding layers, particularly hard chromium, anodised aluminium or chemical nickel (nickel phosphate).

11. A bearing (1) as claimed in one of the preceding Claims 1 - 9, **characterised in that** the bearing (1) has a counter material, with which the sliding material (9a, 9b) is in contact, wherein the counter material includes at least one metal plate, particularly of polished fine steel plate.

12. A bearing (1) as claimed in Claim 11, **characterised in that** the metallic plate adjoins the sliding plate (5) and, in particular, is enclosed by it but is not connected to it.

13. A bearing (1) as claimed in one of the preceding Claims 1 - 9, **characterised in that** the bearing (1) includes a counter material, with which the sliding material (4a, 4b) is in contact, wherein the counter material includes a plastic, particularly from the group consisting of polyamides, polyoxymethylenes, polyethylene terephthalates polybutylene terephthalates.

14. A bearing (1) as claimed in one of the preceding Claims 1 - 13, **characterised in that** the counter material has a coefficient of friction which varies between the equilibrium position and the edge of the sliding surface (5'), particularly a coefficient of friction which substantially increases towards the edge.

15. A bearing (1) as claimed in one of the preceding Claims, **characterised in that** the bearing (1) has minimal coefficients of friction of 2% and/or more.

16. A bearing (1) as claimed in one of the preceding Claims, **characterised in that** the ratio of the static coefficient of friction and dynamic coefficient of friction of the bearing (1) is less than 100%, preferably less than 50% and in particular has a value between 10% and 25%.

17. A bearing (1) as claimed in one of the preceding Claims, **characterised in that** the bearing (1) includes a bearing plate (6), which is arranged via a tilting joint with the slide shoe (4) so as to be tiltable or pivotable relative to it.

18. A bearing (1) as claimed in Claim 17, **characterised in that** the bearing plate (6) is arranged above the sliding shoe (4).

19. A bearing (1) as claimed in Claim 17, **characterised in that** the bearing plate (6) is arranged below the sliding shoe (4).

20. A bearing (1) as claimed in one of the preceding claims 1 - 17, **characterised in that** the friction bearing (1) includes a second sliding plate (6) with a second concave sliding surface (6'), which is in contact with the sliding shoe (4).

21. A bearing (1) as claimed in Claim 20, **characterised in that** the sliding shoe (4) is arranged between the first sliding plate (5) and the second sliding plate (6) in sliding contact with the first and second sliding plates (5, 6).

22. A bearing (1) as claimed in Claim 21, **characterised in that** the sliding shoe (4) is arranged to be displaceable and/or rotatable with respect to both the first sliding plate (5) and also with respect to the second sliding plate (6).

23. A bearing (1) as claimed in one of Claims 20 - 22, **characterised in that** the first sliding surface (5') and the second sliding surface (6') have substantially the same curvature.

24. A bearing (1) as claimed in one of Claims 20 - 22, **characterised in that** the first sliding surface (5') and the second sliding surface (6') have different curvatures.

25. A bearing (1) as claimed in one of Claims 20 - 24, **characterised in that** the sliding shoe (4) is of at least two-part construction with two parts (10, 11) connected via a tilting joint.

26. A bearing (1) as claimed in one of Claims 20 - 25, **characterised in that** the first sliding surface (5') and the second sliding surface (6') have different sliding properties, particularly different coefficients of friction.

27. A bearing (1) as claimed in one of Claims 20 - 26, **characterised in that** the sliding shoe (4) has contact surfaces of a different size to the first sliding surface (5') and to the second sliding surface (6') in order to achieve different surface pressures at the contact surfaces.

28. A bearing (1) as claimed in one of the preceding Claims, **characterised in that** at least one of the sliding surfaces (5', 6') has a constant curvature.

29. A bearing (1) as claimed in one of the preceding Claims, **characterised in that** at least one of the sliding surfaces (5', 6') is formed with a transition arc, in particularly with a clothoid, for better centering of the sliding shoe (4).

30. A bearing (1) as claimed in one of the preceding Claims, **characterised in that** arranged in the edge region of the first sliding surface (5') there is a limiter (8) for limiting the deflection of the sliding shoe (6) with respect to the equilibrium position.

31. A bearing (1) as claimed in one of the preceding Claims, **characterised in that** the bearing (1) includes a monitoring device for determining the condition of the bearing (1) by measuring the thickness of the sliding material projecting beyond the edge of the enclosure, in which the sliding material is encased, to the sliding surface (5', 6') of the corresponding sliding plate (5, 6).

32. A bearing (1) as claimed in one of the preceding Claims, **characterised in that** the sliding surface (5', 6') is so constructed that the equilibrium position is an equilibrium point so that, in the event of a deflection, centering occurs in two dimensions.

33. A bearing (1) as claimed in one of the preceding Claims 1 - 31, **characterised in that** the sliding surface (5', 6') is so constructed that the equilibrium position is an equilibrium lire so that, in the event of a deflection, centering occurs in one dimension.

34. Use of a bearing (1) as claimed in one of the preceding Claims 1 - 32, for decoupling the foundation soil (2) from a building structure (3) in the event of movements and tremors by external influences, particularly by earthquakes.

35. Use of a bearing (1) as claimed in Claim 33 for a single axis horizontal-elastic mounting of structural components in construction engineering.

## Revendications

1. Appui (1) destiné à protéger des bâtiments (3), l'appui (1) étant conçu comme un appui oscillant à glissement doté d'un matériau de glissement (9a, 9b), comprenant une première plaque de glissement (5) dotée d'une première surface de glissement concave (5') et un patin de glissement (4), qui est en contact glissant avec la première surface de glissement (5') de la première plaque de glissement (5), et la première surface de glissement (5') de la première plaque de glissement (5) comprenant une position d'équilibre stable dans au moins une dimension pour le patin de glissement (4), dans laquelle le patin de glissement (4), après avoir été dévié par l'application d'une force extérieure, revient spontanément,
**caractérisé en ce que**
le matériau glissant (9a, 9b) comporte une matière plastique dotée d'un comportement de compensation élasto-plastique, en particulier une matière plastique à faible frottement, le comportement de compensation élasto-plastique s'exprimant de telle sorte que des écarts de 0,5 mm par rapport au plan théorique de la surface de glissement théorique (5') peuvent être compensés.

2. Appui (1) selon la revendication 1, **caractérisé en ce que** le matériau de glissement (9a, 9b) dans les plans de glissement est disposé sur au moins la plus petite des surfaces de glissement (4a, 4b) du patin de glissement (4) et d'une surface de glissement (5') d'une plaque de glissement (5) en contact avec la patin de glissement.

3. Appui (1) selon la revendication 1 ou 2, **caractérisé en ce que** la matériau glissant (9a, 9b) comprend un comportement de compensation élastoplastique tel que des écarts de 1 mm, de manière particulièrement préférée de 2 mm, par rapport au plan théorique de la surface de glissement théorique (5') peuvent être compensés.

4. Appui (1) selon l'une quelconque des revendications précédentes, **caractérisé en ce que** le matériau de glissement (9a, 9b) comporte de l'UHMWPE (polyéthylène à très haut poids moléculaire), est notamment sensiblement constitué de UHMWPE (polyéthylène à très haut poids moléculaire).

5. Appui (1) selon l'une quelconque des revendications 1, 2 ou 3, **caractérisé en ce que** le matériau de glissement (9a, 9b) comporte du PTFE (polytétrafluoroéthylène), est notamment sensiblement constitué de PTFE (polytétrafluoroéthylène).

6. Appui (1) selon l'une quelconque des revendications précédentes, **caractérisé en ce que** le matériau de glissement (9a, 9b) comprend des composants additionnels, en particulier des composants lubrifiants.

7. Appui (1) selon l'une quelconque des revendications précédentes, **caractérisé en ce que** des lubrifiants sont incorporés au moins dans une surface de glissement du matériau de glissement (9a, 9b).

8. Appui (1) selon l'une quelconque des revendications précédentes, **caractérisé en ce que** le matériau de glissement (9a, 9b) comprend un coefficient de frottement en fonction de la pression superficielle de l'appui à glissement (1), tel que le produit du coefficient de frottement et de la pression superficielle dans une plage de pression superficielle prédéfinie est sensiblement constant.

9. Appui (1) selon l'une quelconque des revendications précédentes, **caractérisé en ce que** le matériau de glissement (9a, 9b) présente un coefficient de frottement sensiblement constant indépendamment de la vitesse de glissement entre les composants d'appui de l'appui à glissement (1).

10. Appui (1) selon l'une quelconque des revendications précédentes, **caractérisé en ce que** l'appui (1) comprend un matériau antagoniste avec lequel le matériau de glissement (9a, 9b) est en contact, le matériau antagoniste comportant un matériau métallique doté de couches de glissement métalliques, en particulier du chrome dur, de l'aluminium anodisé ou du nickel chimique (phosphate de nickel).

11. Appui (1) selon l'une quelconque des revendications 1 à 9, **caractérisé en ce que** l'appui (1) comprend un matériau antagoniste avec lequel le matériau de glissement (9a, 9b) est en contact, le matériau antagoniste comportant au moins une tôle métallique, composée en particulier de tôle polie en acier inoxydable.

12. Appui (1) selon la revendication 11, **caractérisé en ce que** la tôle métallique repose sur la plaque de glissement (5) sans y être liée, y est notamment encastrée.

13. Appui (1) selon l'une quelconque des revendications 1 à 9, **caractérisé en ce que** l'appui (1) comprend un matériau antagoniste avec lequel le matériau de glissement (4a, 4b) est en contact, le matériau antagoniste comportant une matière plastique faisant notamment partie du groupe des polyamides, des polyoxyméthylènes, des polyéthylènetéréphtalates ou des polybutylènetéréphtalates.

14. Appui (1) selon l'une quelconque des revendications 10 à 13, **caractérisé en ce que** le matériau antagoniste comprend un coefficient de frottement variant entre la position d'équilibre et le bord de la surface de glissement (5'), en particulier un coefficient de frottement croissant sensiblement en direction du bord.

15. Appui (1) selon l'une quelconque des revendications précédentes, **caractérisé en ce que** l'appui (1) comprend des valeurs de frottement minimales de 2% et/ou plus.

16. Appui (1) selon l'une quelconque des revendications précédentes, **caractérisé en ce que** le rapport entre le coefficient de frottement statique et le coefficient de frottement dynamique de l'appui (1) est inférieur à 100%, de préférence inférieur à 50%, et présente en particulier une valeur comprise entre 10% et 25%.

17. Appui (1) selon l'une quelconque des revendications précédentes, **caractérisé en ce que** l'appui (1) comprend une plaque d'appui (6) qui est disposée de manière à pouvoir basculer et/ou pivoter par rapport au patin de glissement (4) par l'intermédiaire d'une articulation basculante.

18. Appui (1) selon la revendication 17, **caractérisé en ce que** la plaque d'appui (6) est disposée au-dessus du patin de glissement (4).

19. Appui (1) selon la revendication 17, **caractérisé en ce que** la plaque d'appui (6) est disposée au-dessous du patin de glissement (4).

20. Appui (1) selon l'une quelconque des revendications 1 à 17, **caractérisé en ce que** l'appui à glissement (1) comprend une seconde plaque de glissement (6) dotée d'une seconde surface de glissement concave (6'), qui est en contact avec le patin de glissement (4).

21. Appui (1) selon la revendication 20, **caractérisé en ce que** le patin de glissement (4) entre la première plaque de glissement (5) et la seconde plaque de glissement (6) est disposé en contact glissant avec les première et seconde plaques de glissement (5, 6).

22. Appui (1) selon la revendication 21, **caractérisé en ce que** le patin de glissement (4) est disposé de manière à pouvoir se déplacer et/ou tourner aussi bien par rapport à la première plaque de glissement (5) que par rapport à la seconde plaque de glissement (6).

23. Appui (1) selon l'une quelconque des revendications 20 à 22, **caractérisé en ce que** la première surface de glissement (5') et la seconde surface de glissement (6') comprennent des courbures sensiblement identiques.

24. Appui (1) selon l'une quelconque des revendications 20 à 22, **caractérisé en ce que** la première surface de glissement (5') et la seconde surface de glissement (6') comprennent des courbures différentes.

25. Appui (1) selon l'une quelconque des revendications 20 à 24, **caractérisé en ce que** le patin de glissement (4) est construit au moins en deux parties avec deux parties (10, 11) reliées par une articulation basculante.

26. Appui (1) selon l'une quelconque des revendications 20 à 25, **caractérisé en ce que** la première surface de glissement (5') et la seconde surface de glissement (6') comprennent différentes propriétés de glissement, en particulier différents coefficients de frottement.

27. Appui (1) selon l'une quelconque des revendications 20 à 26, **caractérisé en ce que** le patin de glissement (4), pour obtenir différentes pression superficielles sur les surfaces de contact, comprend des surfaces de contact de différentes tailles par rapport à la première surface de glissement (5') et par rapport à la seconde surface de glissement (6').

28. Appui (1) selon l'une quelconque des revendications précédentes, **caractérisé en ce qu'**au moins une des surfaces de glissement (5', 6') comprend une courbure constante.

29. Appui (1) selon l'une quelconque des revendications précédentes, **caractérisé en ce qu'**au moins une des surfaces de glissement (5', 6') est conçue avec un arc de raccordement, en particulier avec une chlotoïde, afin de mieux centrer le patin de glissement (4).

30. Appui (1) selon l'une quelconque des revendications précédentes, **caractérisé en ce qu'**un limiteur (8), destiné à limiter la déviation du patin de glissement (6) par rapport à la position d'équilibre, est disposé dans la zone de bord de la première surface de glissement (5').

31. Appui (1) selon l'une quelconque des revendications précédentes, **caractérisé en ce que** l'appui (1) comprend un dispositif de surveillance destiné à définir l'état de l'appui (1) en mesurant l'épaisseur de la saillie de matériau de glissement au-dessus du bord du compartimentage dans lequel le matériau de glissement est inséré, jusqu'à la surface de glissement (5', 6') de la plaque de glissement (5, 6) correspondante.

32. Appui (1) selon l'une quelconque des revendications précédentes, **caractérisé en ce que** la surface de glissement (5', 6') est conçue de sorte que la position d'équilibre est un point d'équilibre, de sorte que dans le cas d'une déviation, un centrage s'effectue en deux dimensions.

33. Appui (1) selon l'une quelconque des revendications 1 à 31, **caractérisé en ce que** la surface de glissement (5', 6') est conçue de sorte que la position d'équilibre est une ligne d'équilibre, de sorte que dans le cas d'une déviation, un centrage s'effectue en une dimension.

34. Utilisation d'un appui (1) selon l'une quelconque des revendications 1 à 32 destiné à découpler le sol de fondation (2) d'un bâtiment (3) en présence de déplacements et de secousses dus à des influences extérieures, en particulier à des tremblements de terre.

35. Utilisation d'un appui (1) selon la revendication 33 pour un roulement élastique horizontal sur un seul axe de parties de bâtiment dans l'industrie de la construction.
